# EUROPÄISCHE PATENTSCHRIFT

(11) **EP 3 326 227 B1**
(45) Veröffentlichungstag und Bekanntmachung des Hinweises auf die Patenterteilung: **03.04.2019**
(21) Anmeldenummer: 16742276.5
(22) Anmeldetag: 21.07.2016
(51) Int. Cl.: H01M 8/1004, H01M 8/1018, H01M 8/0232, H01M 8/0258, H01M 8/241

(54) **BRENNSTOFFZELLE UND BRENNSTOFFZELLENSTAPEL**
FUEL CELL AND FUEL CELL STACK
PILE À COMBUSTIBLE ET EMPILEMENT DE PILES À COMBUSTIBLE

(30) Priorität: 23.07.2015 DE 102015213950
(43) Veröffentlichungstag der Anmeldung: 30.05.2018
(73) Patentinhaber: Volkswagen AG, 38440 Wolfsburg (DE); AUDI AG, 85045 Ingolstadt (DE)
(72) Erfinder: SCHOLZ, Hannes, 38106 Braunschweig (DE)
(86) Internationale Anmeldenummer: PCT/EP2016/067399
(87) Internationale Veröffentlichungsnummer: WO 2017/013201

(56) Entgegenhaltungen:
- EP-A2- 1 381 101
- JP-A- 2005 322 595
- US-A- 5 641 586
- US-A- 6 146 780

## Beschreibung

Die Erfindung betrifft einen Brennstoffzellenstapel, mehreren Bipolarplatten jeweils aufweisend einen aktiven Bereich, wobei eine Oberfläche der Bipolarplatte zumindest im aktiven Bereich unprofiliert ausgebildet ist, eine zwischen jeweils zwei Bipolarplatten angeordnete Membran-Elektroden-Einheit, und eine zwischen der Membran-Elektroden-Einheit und zumindest einer der Bipolarplatten angeordnete Gasverteilerschicht, wobei die Gasverteilerschicht einen porösen Flusskörper umfasst.

Brennstoffzellen nutzen die elektrochemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Einheit (MEA für *membrane electrode assembly*), die ein Verbund aus einer ionenleitenden, insbesondere protonenleitenden Membran und jeweils einer beidseitig an der Membran angeordneten Elektrode (Anode und Kathode) ist. Zudem können Gasdiffusionsschichten (GDL) beidseitig der Membran-Elektroden-Einheit an den, der Membran abgewandten Seiten der Elektroden angeordnet sein. In der Regel wird die Brennstoffzelle durch eine Vielzahl, im Stapel (*stack*) angeordneter MEAs gebildet, deren elektrische Leistungen sich addieren. Im Betrieb der Brennstoffzelle wird der Brennstoff, insbesondere Wasserstoff H₂ oder ein wasserstoffhaltiges Gasgemisch, der Anode zugeführt, wo eine elektrochemische Oxidation von H₂ zu H⁺ unter Abgabe von Elektronen stattfindet. Über den Elektrolyten oder die Membran, welche die Reaktionsräume gasdicht voneinander trennt und elektrisch isoliert, erfolgt ein (wassergebundener oder wasserfreier) Transport der Protonen H⁺ aus dem Anodenraum in den Kathodenraum. Die an der Anode bereitgestellten Elektronen werden über eine elektrische Leitung der Kathode zugeleitet. Der Kathode wird Sauerstoff oder ein sauerstoffhaltiges Gasgemisch zugeführt, sodass eine Reduktion von O₂ zu H₂O unter Aufnahme der Protonen und Elektronen stattfindet.

Die Brennstoffzelle wird durch eine Vielzahl, im Stapel angeordneter Einzelzellen gebildet, sodass auch von einem Brennstoffzellenstapel gesprochen wird. Zwischen den Membran-Elektroden-Einheiten sind Bipolarplatten angeordnet, welche eine Versorgung der Einzelzellen mit den Betriebsmedien, also den Reaktanden und einer Kühlflüssigkeit sicherstellen. Zudem sorgen die Bipolarplatten für einen elektrisch leitfähigen Kontakt zu den Membran-Elektroden-Einheiten.

Bipolarplatten sind zumeist aus einem Paar profilierter Plattenhrälften aufgebaut, die jeweils eine Kühlmittelseite und eine Zellseite aufweisen. Die beiden Platten sind derart einander gegenüber angeordnet und verbunden, dass sich zwischen den einander zugewandten Kühlmittelseiten Kanäle zum Transport von Kühlmittel ausbilden. Die Platten besitzen in ihrem aktiven Bereich eine Gruppierung aus Nuten oder Kanälen, die auf ihren Zellseiten offene Flussfelder zur Verteilung der Reaktanden über die Oberflächen der jeweiligen Anoden und Kathoden bilden. Zwischen den Platten sind innerhalb in der Bipolarplatte Kühlmittelkanäle geformt und verteilen Kühlmittel über den Brennstoffzellenstapel zur Kühlung desselben.

Eine Alternative zu diesen Strukturen ist US 6,146,780 A zu entnehmen. Die dort beschriebene Bipolarplatte weist keine Strukturierung sondern eine Mehrzahl von Platten auf, wobei einige Platten lediglich einen Rahmen aufweisen, in dessen Inneren ein diffuses Flussfeld ausbildbar ist.

Eine weitere Alternative zu profilierten Bipolarplatten stellen solche dar, die im aktiven Bereich im Wesentlichen planar ausgeformt sind. Die Flussfelder, welche sich bei den vorstehend beschriebenen Bipolarplatten aus der Profilierung der Platten ergeben, werden hierbei durch Flusskörper aus porösem Material ersetzt.

Brennstoffzellen, die derartige nicht profilierte Bipolarplatten aufweisen, sind unter anderem aus der US 6,770,394 B2, der DE 112007000638 T5, der DE 112007002486 T5, JP 2005 322 595 A und der DE 112007000282 T5 bekannt. Darin werden poröse Körper beschrieben, die beidseits von flachen Bipolarplatten angeordnet sind.

Eine Kombination der beschriebenen Flussfelder und porösem Flusskörper ist in DE 102012218590 A1 offenbart, wobei beidseits einer nicht profilierten Bipolarplatte poröse Flusskörper angeordnet sind, die bereichsweise von Strömungskanälen unterbrochen werden, die sich aus einer Profilstruktur der Bipolarplatte ergeben.

Die beschriebenen Bipolarplatten und Brennstoffzellen haben den Nachteil, dass durch die Anordnung eines porösen Flusskörpers zwar das Volumen der Brennstoffzelle im Vergleich zu profilierten Bipolarplatten reduziert wird, die volumetrische Leistungsdichte jedoch noch nicht optimal ist. Im Vergleich zu herkömmlichen, durch Strömungskanäle ausgebildeten Flussfeldern führt zudem die Verwendung von porösen Flusskörpern zu einem trägen dynamischen Verhalten, zu erhöhtem Druckverlust auf beiden Gasseiten, zu einem verschlechterten Wasseraustrag und zu einer Ungleichverteilung der Reaktanden auf beiden Seiten der Membran-Elektroden-Einheit.

Der Erfindung liegt nun die Aufgabe zugrunde, eine Brennstoffzelle bereitzustellen, die die Probleme des Stands der Technik löst oder zumindest reduziert. Insbesondere soll eine Brennstoffzelle mit einer Bipolarplatte bereitgestellt werden, die es ermöglicht, die volumetrische Leistungsdichte durch eine verringerte Bauhöhe zu erhöhen und den Stofftransport zu verbessern.

Diese Aufgabe wird durch eine Brennstoffzelle mit den Merkmalen der unabhängigen Ansprüche gelöst.

Somit betrifft ein erster Aspekt der Erfindung einen Brennstoffzellenstapel, der mehrere Bipolarplatten umfasst, die jeweils einen aktiven Bereich aufweisen und im aktiven Bereich unprofiliert ausgebildet sind. In der Schichtstruktur ist zwischen jeweils zwei Bipolarplatten eine Membran-Elektroden-Einheit angeordnet, wobei zwischen der Membran-Elektroden-Einheit und zumindest einer der Bipolarplatten eine Gasverteilerschicht angeordnet ist die einen porösen Flusskörper umfasst. Erfindungsgemäß ist vorgesehen, dass die Gasverteilerschicht im aktiven Bereich Ausnehmungen aufweist. Der Brennstoffzellenstapel setzt sich aus im Stapel angeordneten Brennstoffzellen, wobei zumindest schematisch eine Bipolarplatte des Stapels zwei Hälften aufweist. Somit ergibt sich für eine erfindungsgemäße Brennstoffzelle jeweils eine Schichtstruktur aus Bipolarplattenhälfte/ Gasverteilerschicht/ Membran-Elektroden-Einheit/ optionale Gasverteilerschicht/ Bipolarplattenhälfte aufweisen, wobei zumindest eine Gasverteilerschicht einen Flusskörper umfasst, der Ausnehmungen aufweist.

Der Vorteil des erfindungsgemäßen Brennstoffzellenstapels beziehungsweise der erfindungsgemäßen Brennstoffzelle liegt in einer Erhöhung der Leistungsdichte gegenüber der bekannten Brennstoffzellen. Die Erhöhung der Leistungsdichte im Vergleich zum herkömmlichen Flussfeld einer profilierten Bipolarplatte wird durch eine Reduzierung der Bauhöhe erreicht, da ein poröser Flusskörper eine Bauhöhe aufweist, die geringer ist als die Profilhöhe eines Flussfeldes einer profilierten Bipolarplatte. Gleichzeitig ermöglicht die Verwendung der erfindungsgemäßen Gasverteilerschicht einen verbesserten Stofftransport.

Insbesondere im Vergleich mit der in US 677 03 94 B2 offenbarten Brennstoffzelle weist die erfindungsgemäße Brennstoffzelle im Betrieb einen geringeren Druckverlust der Reaktandengase auf, da sich die Strömungskanäle in der erfindungsgemäßen Gasverteilerschicht sowohl aus diffusen Strömungskanälen, nämlich aus fluidführend verbundenen Poren des Flusskörpers und diskreten Strömungskanälen in Form der zusätzlichen Ausnehmungen zusammensetzen. Die Ausnehmungen weisen einen höheren Durchmesser auf als die diffusen Strömungskanäle des Flusskörpers. Dadurch ist der Strömungswiderstand in der erfindungsgemäßen Gasverteilerschicht reduziert. Zusätzlichen ermöglichen die Ausnehmungen eine bessere Gleichverteilung der Gase und damit einen besseren Brennstoffzellenwirkungsgrad, eine höhere Lebensdauer und ein insgesamt stabileres Betriebsverhalten. Die bessere Gleichverteilung ergibt sich daraus, dass die Reaktandengase aufgrund des erhöhten Durchmessers schnell und gleichmäßig in den Ausnehmungen verteilt werden. In den Ausnehmungen münden jeweils mehrere diffuse Strömungskanäle der Poren. Daher gelangt das Reaktandengas nicht nur über den Verteilerbereich in die diffusen Strömungskanäle, sondern auch über die Ausnehmungen. Weisen einige der diffusen Strömungskanäle aufgrund einer Störstelle einen erhöhten Strömungswiderstand auf, so zieht sich der damit einhergehende Druckverlust nicht über den gesamten aktiven Bereich, sondern wird durch die Ausnehmungen stromab der Störstelle wieder ausgeglichen.

Zudem ermöglichen die erfindungsgemäßen Ausnehmungen gegenüber dem Stand der Technik eine Verbesserung des Austrags von flüssigem Wasser, was sich wiederum in einer Erhöhung des Brennstoffzellenwirkungsgrads, einer erhöhten Lebensdauer der Brennstoffzelle beziehungsweise des Brennstoffzellenstapels, sowie einem insgesamt stabilerem Betriebsverhalten niederschlägt.

Erfindungsgemäß weist zumindest eine der Bipolarplatten keine Kühlmittelkanäle auf. Die erfindungsgemäße Ausgestaltung der Brennstoffzellen ermöglicht, dass die in der MEA freigesetzte Wärme gut zum Kühlmedium geleitet wird. Dies ermöglicht eine Reduzierung der Kühlmittelkanäle. Dies kann beispielsweise durch eine Reduzierung der Höhe der Kühlmittelkanäle und/oder durch das Weglassen der Kühlmittelkanäle realisiert werden. Beide Alternativen führen zu einer zusätzlichen Reduktion der Bauhöhe der betreffenden Brennstoffzelle und somit einer erhöhten Leistungsdichte des gesamten Brennstoffzellenstapels.

In bevorzugter Ausgestaltung ist vorgesehen, dass Bipolarplatten mit Kühlmittelkanälen und Bipolarplatten ohne Kühlmittelkanäle im Brennstoffzellenstapel alternierend angeordnet sind. Diese Ausgestaltung stellt sicher, dass alle Brennstoffzellen optimal gekühlt werden und dennoch eine Reduzierung der Bauraumhöhe erreicht wird.

Bipolarplatten im Sinne der Erfindung trennen Reaktionsgase und Kühlmittel voneinander. Sie weisen inaktive Verteilerbereiche für die Zu- und Abführung und Verteilung der Betriebsmedien sowie einen aktiven Bereich auf, welcher im Brennstoffzellenstapel an die elektrochemisch aktiven Bereiche der Elektrodenräume anschließt.

Der Verteilerbereich weist im Allgemeinen Durchbrüche beziehungsweise Hauptgaskanäle auf, in denen Reaktandengas auf die jeweilige Elektrodenseite, also Kathodenseite oder Anodenseite, geführt und von dort aus in den aktiven Bereich verteilt wird. Jede Elektrodenseite einer Bipolarplatte weist im Allgemeinen zumindest zwei Verteilerbereiche auf, welche den aktiven Bereich einschließen.

Der aktive Bereich der Bipolarplatte wird durch den Bereich definiert, der im späteren Brennstoffzellenstapel zu einer Membran-Elektroden-Einheit benachbart angeordnet ist und in welchem die Brennstoffzellenreaktion stattfindet. Im aktiven Bereich ist die erfindungsgemäße Bipolarplatte zumindest einseitig nicht profiliert ausgebildet.

Bei dem Flusskörper handelt es sich um einen porösen insbesondere makroporösen Körper, der eine offenporige Struktur aufweist, wobei die Poren derart miteinander verbunden sind, dass sich ein für das jeweilige Reaktandengas durchlässiges Kanalsystem diffuser Kanäle ergibt.

Bei dem porösen Flusskörper handelt es sich vorzugsweise um einen Körper, also ein dreidimensionales Gebilde, aus porösem, insbesondere offenporigem Material mit einem geringen Strömungswiderstand für Reaktandengas, wie beispielsweise Luft oder Wasserstoff. Innerhalb des Flusskörpers bilden sich keine diskreten Strömungskanäle aus, vielmehr strömt das Reaktandengas gleichmäßig in Abhängigkeit vom Strömungswiderstand durch den gesamten porösen Flusskörper. Der Strömungswiderstand wird einerseits durch die Porosität und den Porendurchmesser des Flusskörper definiert und andererseits durch die durch eventuell in den Poren befindlichen Störstellen, wie beispielsweise Wassertropfen oder ähnlichem.

Bei den Ausnehmungen handelt es sich bevorzugt um geschlossene oder offene, insbesondere diskrete, Kanäle. Diese haben vorzugsweise einen runden, trapezoidalen oder rechteckigen Querschnitt. Sind die Ausnehmungen als geschlossene Kanäle ausgestaltet, sind sie bevorzugt als Hohlkörper im Flusskörper ausgebildet. In der Ausgestaltung als offene Kanäle sind sie zumindest zweiseitig vom Flusskörper und einseitig durch die Membran-Elektroden-Einheit und/oder die Bipolarplatte begrenzt. Sie sind vorzugsweise regelmäßig über den aktiven Bereich verteilt. Die Ausgestaltung der Ausnehmungen als diskrete Kanäle ermöglichen eine Verbesserung des Stofftransports. Zudem ist der Strömungswiderstand der Reaktandengase in dieser Ausgestaltung in besonderem Maß herabgesetzt und eine Gleichverteilung der Gase über den aktiven Bereich gewährleistet. Die Kanalbreite und der Abstand sind typischerweise in der Größenordnung um einen Millimeter, vorzugsweise im Bereich von 0,5 mm bis 2 mm, ausgeführt. Die Kanalhöhe beziehungsweise die Höhe des porösen Körpers beträgt hingegen bevorzugt weniger als einen Millimeter. Somit sind die Größenordnungen profilierten Bipolarplatten im Wesentlichen beibehalten.

Ferner ist bevorzugt, dass sich die diskreten Kanäle zumindest bereichsweise über den aktiven Bereich, insbesondere zwischen den Verteilerbereichen, längserstrecken. Diese Ausgestaltung bietet den Vorteil, dass die Kanäle entlang der Hauptströmungsrichtung der Reaktandengase erstrecken, was den vorteilhaften Effekt der Ausgestaltung als Kanalstruktur noch verstärkt. Alternativ oder zusätzlich sind die Kanäle zumindest bereichsweise mäanderförmig ausgestaltet.

Mit besonderem Vorteil sind die Ausnehmungen als Durchgangsöffnungen ausgebildet, die sich durch die Dicke der Gasverteilerschicht erstrecken. Mit anderen Worten weisen die Ausnehmungen eine Tiefe (t) auf, welche einer Höhe (h) der Gasverteilerschicht entspricht. In dieser Ausgestaltung haben die Ausnehmungen die maximale Höhe und bei gleichmäßiger Ausformung, wie beispielsweise bei rundem oder quadratischem Querschnitt, einen maximalen Durchmesser. Da der Strömungswiderstand proportional zum Durchmesser der Ausnehmungen sinkt ist der Strömungswiderstand in dieser Ausgestaltung weiter optimiert. Dies führt wiederum zu einem reduzierten Druckverlust der Reaktandengase und zu einem verbesserten Wasseraustrag.

In einer weiteren Ausgestaltung ist bevorzugt, dass der Flusskörper eine makroporöse Struktur umfasst. Diese Ausgestaltung hat den Vorteil, dass das Reaktandengas mit möglichst geringem Strömungswiderstand strömt. Vorzugsweise weist das makroporöse Material einen mittleren Porendurchmesser von mehr als 50 µm auf. Ferner ist bevorzugt, dass die Porosität des Flusskörpers 50 %, insbesondere 75 %, bevorzugt 80 %, insbesondere 90 % überschreitet. Mit besonderem Vorteil variiert der mittlere Porendurchmesser und/oder die Porosität des Flusskörpers über die Fläche und/oder die Höhe des aktiven Bereiches. Insbesondere ist bevorzugt, dass sich ein Gradient des mittleren Porendurchmessers oder der Porosität dergestalt ausbildet, dass ein oder mehrere Randbereiche des Flusskörpers eine kleinere Porosität und/oder einen kleineren mittleren Porendurchmesser aufweisen als ein innerer Bereich des Flusskörpers. Diese Ausgestaltung hat den Vorteil, dass sich das Reaktandengas zwar gleichmäßig über den Flusskörper verteilt und über den aktiven Bereich strömt, der Strömungswiderstand in Richtung der Randbereiche des Flusskörpers jedoch derart ansteigt, dass ein Ausfließen des Reaktandengases und somit ein Verlust an Reaktandengas verhindert oder zumindest reduziert werden.

In einer weiteren Ausgestaltung der erfindungsgemäßen Brennstoffzelle ist vorgesehen, dass der Flusskörper ein metallisches Material umfasst. Diese Ausgestaltung hat den Vorteil, dass auch der Flusskörper elektrisch leitfähig ist und insbesondere ein Material aufweist, welches physikalisch und chemisch der Bipolarplatte ähnlich ist. Somit werden elektrische Übergangsverluste an der Grenze zwischen Bipolarplatte und Flusskörper reduziert. Zudem lassen sich metallische Materialien sehr gut zu porösen Materialien verarbeiten und sind unter den Bedingungen der Brennstoffzelle chemisch und physikalisch stabil.

Die metallischen Materialien werden zur Verwendung als Flusskörper insbesondere als Metallschäume verarbeitet, oder aber mittels Platzhalter-Sinterverfahren geformt. Zudem ist bevorzugt, wenn das metallische Material des Flusskörpers alternativ oder zusätzlich zu den unregelmäßigen Poren der Metallschäume oder der Sintermetalle regelmäßige Strukturen wie Röhrenstrukturen, Wabenstrukturen oder Fachwerkstrukturen aufweist. Letztere werden vorzugsweise mittels Druckverfahren oder als Folie auf die Bipolarplatte aufgebracht.

Mit besonderem Vorteil ist der Flusskörper stoffschlüssig mit der Bipolarplatte verbunden. Diese Ausgestaltung unterstützt die Leitfähigkeit, verbessert die Verarbeitbarkeit der Bipolarplatte und reduziert Übergangsverluste an der Grenze zwischen Flusskörper und Bipolarplatte.

In einer besonders bevorzugten Ausgestaltung der Erfindung ist ferner vorgesehen, dass die Membran-Elektroden-Einheit eine Gasdiffusionsschicht aufweist die an die Gasverteilerschicht angrenzt und deren Porosität kleiner ist als die Porosität der Gasverteilerschicht. Vorzugsweise weist die Gasdiffusionsschicht einen mittleren Porendurchmesser von 30 µm auf. Die Gasdiffusionsschicht hat dabei ebenfalls die Funktion der Medienverteilung. Insbesondere bei der Anordnung zwischen Membran-Elektroden-Einheit und Gasverteilerschicht in der erfindungsgemäßen Ausgestaltung hat die Anordnung der Gasdiffusionsschicht den Vorteil, dass außerhalb der diskreten Strömungskanäle der Ausnehmungen eine Reaktandengasverteilung stattfindet.

Alternativ weist die Membran keine Gasdiffusionsschicht auf. Die Kombination aus diskreten und diffusen Kanälen ermöglicht die Gewährleistung eines Stofftransports ohne Gasdiffusionsschicht. In dieser Ausgestaltung wird bevorzugt zwischen Membran-Elektroden-Einheit und der Gasverteilerschicht eine mikroporöse Schicht angeordnet. Diese ist in ihren physikalischen Eigenschaften (Porosität, Leitfähigkeit) der Gasverteilerschicht ähnlich, weist jedoch bevorzugt einen kleineren mittleren Porendurchmesser auf als die Gasverteilerschicht. Die mikroporöse Schicht umfasst typischerweise Kohlenstoffpartikel (Ruß), die durch PTFE verbunden und hydrophobiert sind, oder besteht aus diesen. Durch das Weglassen der Gasdiffusionsschicht auf zumindest einer der Elektrodenseiten der Membran-Elektroden-Einheit wird der Bauraum der Brennstoffzelle um die Höhe der Gasdiffusionsschicht weiter reduziert und die Leistungsdichte entsprechend erhöht.

Ein weiterer Aspekt der Erfindung betrifft einen Brennstoffzellenstapel umfassend mehrere im Stapel angeordneter erfindungsgemäßer Brennstoffzellen, wobei in zumindest einer der Bipolarplatten Kühlkanäle ausgebildet sind.

Ein weiterer Aspekt der Erfindung betrifft ein Brennstoffzellensystem mit einem erfindungsgemäßen Brennstoffzellenstapel sowie ein Fahrzeug mit einem solchen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Brennstoffzellenstapels,
- Figur 2: eine schematische Darstellung einer Aufsicht auf eine Bipolarplatte in einer bevorzugten Ausgestaltung der Erfindung,
- Figur 3: eine schematische Schnittansicht des Querschnitts eines Brennstoffzellenstapels nach dem Stand der Technik im aktiven Bereich,
- Figur 4: eine schematische Schnittansicht des Querschnitts eines Brennstoffzellenstapels im aktiven Bereich nach einer ersten Ausgestaltung der Erfindung,
- Figur 5: eine schematische Schnittansicht des Querschnitts eines Brennstoffzellenstapels im aktiven Bereich nach einer zweiten Ausgestaltung der Erfindung,
- Figur 6: eine schematische Schnittansicht des Querschnitts eines Brennstoffzellenstapels im aktiven Bereich nach einer dritten Ausgestaltung der Erfindung, und
- Figur 7: eine schematische Schnittansicht des Querschnitts eines Brennstoffzellenstapels im aktiven Bereich nach einer vierten Ausgestaltung der Erfindung.

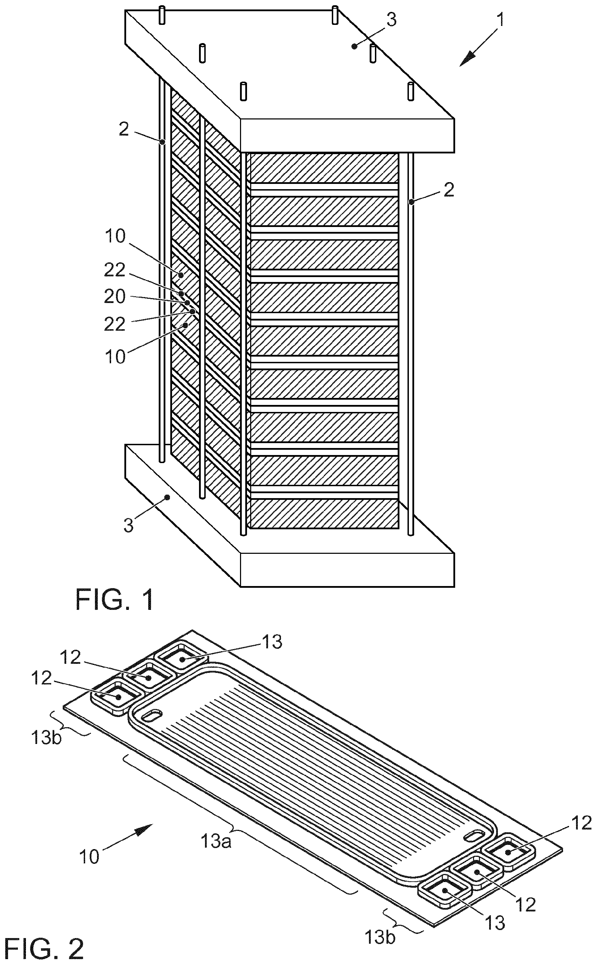

Figur 1 zeigt in einer stark schematischen Darstellung einen Brennstoffzellenstapel. Der Brennstoffzellenstapel 1 umfasst zwei Endplatten 3 zwischen denen eine Vielzahl gestapelter Stapelelemente angeordnet ist, welche Bipolarplatten 10 und Membran-Elektroden-Einheiten 20 umfassen. Die Bipolarplatten 10 sind mit den Membran-Elektroden-Einheiten 20 abwechselnd gestapelt. Die Membran-Elektroden-Einheiten 20 umfassen jeweils eine Membran und beidseitig der Membran anschließende Elektroden, nämlich eine Anode und eine Kathode (nicht dargestellt). An den Elektroden anliegend können die Membran-Elektroden-Einheiten 20 zudem Gasdiffusionsschichten 22 aufweisen. Zwischen den Bipolarplatten 10 und Membran-Elektroden-Einheiten 20 sind jeweils Dichtungselemente angeordnet, welche die Anoden- und Kathodenräume gasdicht nach außen abdichten (nicht gezeigt). Zwischen den Endplatten 3 ist der Brennstoffzellenstapel 1 mittels Zugelementen 2, zum Beispiel Zugstangen oder Spannblechen, verpresst.

In Figur 1 sind von den Bipolarplatten 10 und den Membran-Elektroden-Einheiten 20 lediglich die Schmalseiten sichtbar. Die Hauptseiten der Bipolarplatten 10 und der Membran-Elektroden-Einheiten 20 liegen aneinander an. Die Darstellung in Figur 1 ist nicht dimensionsgetreu. Typischerweise beträgt eine Dicke einer Einzelzelle, bestehend aus einer Bipolarplatte 10 und einer Membran-Elektroden-Einheit 20, wenige mm, insbesondere maximal 2 mm, wobei die Membran-Elektroden-Einheit 20 die weitaus dünnere Komponente ist. Zudem ist die Anzahl der Einzelzellen üblicherweise wesentlich größer als dargestellt.

Figur 2 zeigt eine Bipolarplatte 10 in Aufsicht auf eine Elektrodenseite. Die Bipolarplatte kann zwei Plattenhälften 11 umfassen. Die Bipolarplatte 10 weist einen aktiven Bereich 13a auf, der zweiseitig zu Verteilerbereichen 13b benachbart ist. Dabei grenzen die Verteilerbereiche 13b an zwei gegenüberliegende Seiten des aktiven Bereiches 13a an. Die Verteilerbereiche 13b weisen jeweils zwei Hauptgaskanäle 12 zur Bereitstellung von zwei Reaktandengasen sowie einen Kühlmittelhauptkanal 13 auf. Im Brennstoffzellenstapel 1 wird ein Reaktandengas von einem Verteilerbereich 13b über den aktiven Bereich 13a hin zum anderen Verteilerbereich 13b geführt.

Der aktive Bereich 13a einer der Plattenhälften 11 kann eine Profilstruktur aufweisen. Zumindest eine der Platten ist hingegen im aktiven Bereich 13a unprofiliert ausgebildet. Zwischen den Plattenhälften 11 bildet sich in einer negativen Profilstruktur der zumindest einen Plattenhälfte 11 Kühlmittelkanäle 14 zur Führung von Kühlmittel. Alternativ kann die Bipolarplatte 10 einstückig ausgebildet und/oder beidseitig im aktiven Bereich unprofiliert ausgebildet sein. Dann bilden sich die Kühlmittelkanäle 14 nicht aus einer negativen Profilstruktur, sondern als Hohlräume im Innern der Bipolarplatte.

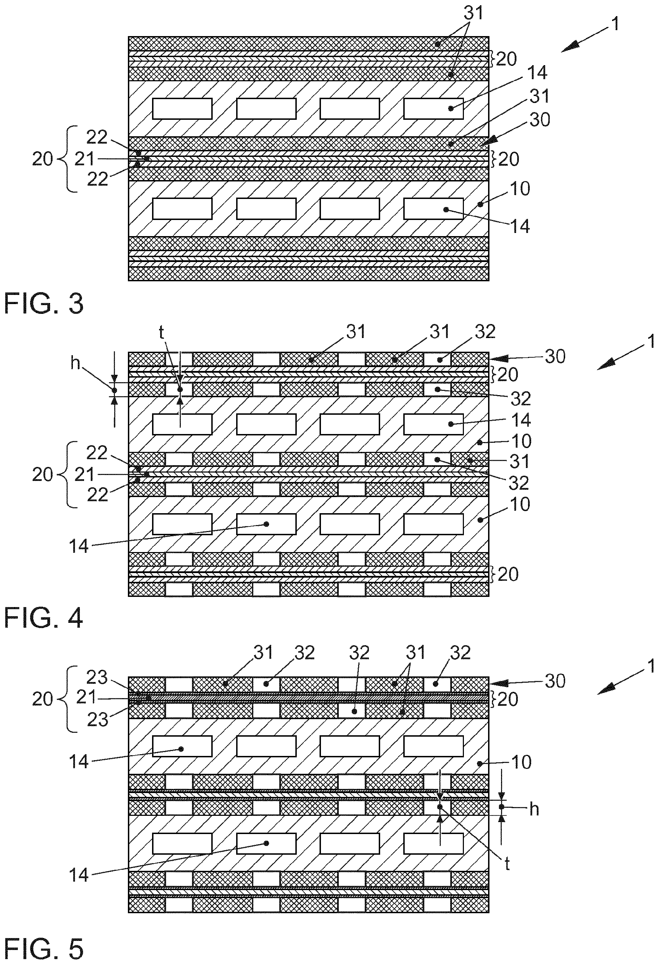

Figur 3 zeigt eine Querschnittszeichnung eines Ausschnitts des aktiven Bereichs 13a einer Brennstoffzelle nach dem Stand der Technik. Mehrere Bipolarplatten 10 sind alternierend mit Membran-Elektroden-Einheiten 20 zu einem Brennstoffzellenstapel 1 angeordnet. Dabei sind zwischen den Bipolarplatten 10 und den Membran-Elektroden-Einheiten 20 optional jeweils Gasdiffusionsschichten 22 angeordnet. Die Bipolarplatten 10 der Brennstoffzelle nach dem Stand der Technik umfassen jeweils eine beidseits im aktiven Bereich unprofiliert ausgebildete Bipolarplatte 10, welche im Innern Kühlmittelkanäle 14 in Form von Hohlräumen ausbilden. Die Kühlmittelkanäle erstrecken sich in Längsrichtung über den aktiven Bereich 13a der Bipolarplatte 10 und verbinden die Kühlmittelhauptkanäle 13 der beiden Verteilerbereiche 13b fluidführend miteinander. Beidseits der Bipolarplatte 10 ist eine Gasverteilerschicht 30 angeordnet. Die Gasverteilerschicht 30 umfasst einen porösen Flusskörper 31. Die Poren des porösen Flusskörpers 31 können miteinander in Verbindung stehen und bilden ein Netz aus diffusen Kanälen, in denen Reaktandengase im aktiven Bereich 13a der Brennstoffzelle verteilt werden können.

Figur 4 zeigt im Gegensatz dazu einen Querschnitt eines Ausschnitts des aktiven Bereichs 13a einer erfindungsgemäßen Brennstoffzelle. Im Unterschied zur Brennstoffzelle nach dem Stand der Technik weist die Gasverteilerschicht 30 zumindest auf einer Elektrodenseite einer Bipolarplatte 10 Ausnehmungen 32 auf. Diese Ausnehmungen 32 können durch Vertiefungen im porösen Flusskörper 31 gebildet sein oder, wie abgebildet, den Flusskörper 31 unterbrechen, so dass eine Tiefe (t) der Ausnehmungen 32 einer Höhe (h) der Gasverteilerschicht 30 entspricht. Die Breite der Ausnehmungen 32 entspricht bevorzugt einem 1- bis 3-Fachen der Höhe (h) der Gasverteilerschicht 30, beziehungsweise einem 0,5- bis 2-Fachen der breite des Flusskörpers 31 zwischen den Ausnehmungen 32. Die Ausnehmungen sind vorzugweise als offene oder geschlossene (nicht gezeigt) Kanäle angeordnet, die sich geradlinig oder mäanderförmig über den aktiven Bereich der Brennstoffzelle erstrecken. Die einzelnen Kanäle sind bevorzugt im Wesentlichen parallel zueinander angeordnet und überschneiden sich im aktiven Bereich nicht.

Bei dem porösen Flusskörper 31 kann es sich beispielsweise um ein poröses, insbesondere makroporöses Material handeln, welches beispielsweise aus einem Metall gefertigt ist. Der poröse Flusskörper 15 weist Poren auf, die den mittleren Porendurchmesser 50 nm überschreiten. Die Poren sind dabei derart im Flusskörper 15 verteilt, dass sich eine Porosität von größer 50 %, vorzugsweise größer 75 %, insbesondere größer 80 %, besonders bevorzugt von größer 90 % ergibt. Bei den Poren können sowohl unregelmäßige Strukturen auftreten, wie beispielsweise in Metallschäumen oder gesinterten Metallen, oder regelmäßige Strukturen, wie sie beispielsweise bei einer Wabenstruktur, einer Röhrenstruktur oder einer Fachwerkstruktur vorkommen.

Die Membran-Elektroden-Einheit 20 umfasst eine Membran 21, die beispielsweise als Polymerelektrolyt (PEM)-Membran ausgestaltet ist. Die Membran-Elektroden-Einheit 20 kann ferner eine Gasdiffusionsschicht 22 aufweisen. Die Gasdiffusionsschicht 22 kann beidseits der Membran 21 oder nur einseitig der Membran 21 angeordnet sein. Bei der Gasdiffusionsschicht 22 handelt es sich ebenfalls um ein poröses Material, welches elektrisch leitfähig ist. Die Porosität sowie der Porendurchmesser sind jedoch zumeist kleiner als Porosität und/oder Porendurchmesser des Flusskörpers 31. Die Gasdiffusionsschicht 22 ist ebenfalls elektrisch leitfähig, weist zumeist allerdings kein metallisches Material auf, sondern ist vielmehr aus kohlenstoffhaltigen Materialien, wie beispielsweise Grafit, gefertigt.

Alternativ kann die Gasdiffusionsschicht 22 durch eine mikroporöse Schicht 23 ersetzt sein (in Figur 5 gezeigt), die sich durch eine geringere Höhe auszeichnet. Die mikroporöse Schicht 23 ähnelt in ihren physikalischen Eigenschaften, wie Material und Porösität dem Flusskörper 31, weist jedoch eine kleinere Porösität auf als dieser. Insbesondere sind die Porendurchmesser in der Gasdiffusionsschicht 22 ebenso wie in der mikroporösen Schicht 23 kleiner als ein mittlerer Durchmesser der Poren im Flusskörper 31.

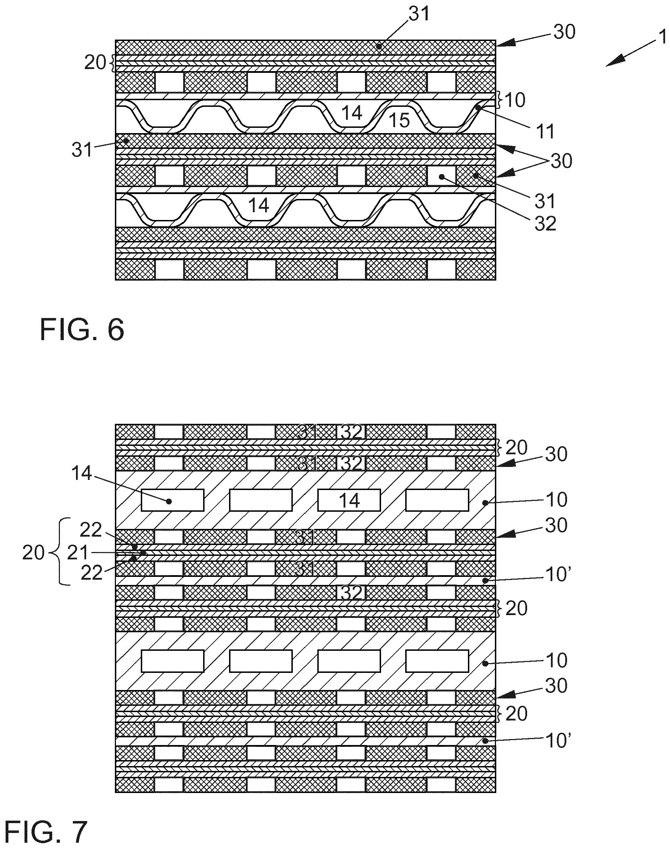

In einer in Figur 6 gezeigten vierten Ausgestaltungsform ist der Querschnitt des aktiven Bereichs eines erfindungsgemäßen Brennstoffzellenstapels 1 gezeigt, der unsymmetrisch ausgestaltet ist. In dieser Ausgestaltung ist die Bipolarplatte 10 aus zwei Plattenhälften ausgebildet, wobei eine der Plattenhälften 11 im aktiven Bereich profiliert ausgebildet ist. Aus der Profilstruktur ergeben sich auf einer Elektrodenseite der profilierten Plattenhälfte 11 Strömungskanäle 15 für Reaktandengase und auf einer, der anderen Plattenhälfte zugewandten Innenseite der Plattenhälfte 11 Kühlmittelkanäle 14 aus. An der Bipolarplatte 10 grenzt beidseitig jeweils eine Gasverteilerschicht 30 mit einem porösen Flusskörper 31 an. Die Gasverteilerschichten 30 sind in dieser Ausführungsform bevorzugt ungleich ausgestaltet. Die an die unprofilierte Plattenhälfte angrenzende Gasverteilerschicht 30 weist die erfindungsgemäßen Ausnehmungen 32 auf. Die Gasverteilerschicht 30, die an die Strömungskanäle 15 angrenzt, weist hingegen einen Flusskörper 31 ohne Ausnehmungen 32 auf.

Die Funktionsweise der in Figur 6 gezeigten erfindungsgemäßen Brennstoffzellen ergibt sich insbesondere aus der unsymmetrischen Ausgestaltung. So ist zur einen Seite der Bipolarplatte 10, nämlich zur profilierten Plattenhälfte 11, ein Flussfeld mit Strömungskanälen 15 ausgebildet, welches den Transport beziehungsweise die Verteilung eines ersten Reaktandengases ermöglicht, während auf der anderen Seite der Bipolarplatte, nämlich an der Seite der zweiten Plattenhälfte, ein Flusskörper 31 angeordnet ist, durch den ein zweites Reaktandengas gleichmäßig über den aktiven Bereich der Bipolarplatte im Elektrodenbereich verteilt wird. Der Durchmesser der Strömungskanäle 15 ist bevorzugt größer als der der Ausnehmungen 32, so dass die profilierte Plattenhälfte vorzugsweise, aber nicht zwangsläufig, kathodenseitig angeordnet wird. Alternativ kann die Ausgestaltung des Anodenraums den Kathodenraum betreffen. Der Anodenraum weist dann entsprechend die profilierte Bipolarplatte auf.

Die kumulierte Höhe aus unprofilierter Plattenhälfte 11 und daran angeordneter Gasverteilerschicht 30 ist kleiner als die kumulierte Höhe aus profilierter Plattenhälfte 11 und daran angeordneter Gasverteilerschicht.

Die Strömungskanäle 15 der profilierten Plattenhälfte 11 weisen dabei im Wesentlichen die gleiche Funktion, nämlich eine gleichmäßige Verteilung des jeweiligen Reaktandengases in Erstreckungsrichtung der Brennstoffzelle, auf, wie die vorzugsweise kanalartigen Ausnehmungen 32 der Gasverteilerschicht 30 auf der unprofilierten Seite der Bipolarplatte 10. Figur 7 zeigt eine weiter bevorzugte Ausführungsform des erfindungsgemäßen Brennstoffzellenstapels 1. Im Stapel sind jeweils Membran-Elektroden-Einheiten 20 und Bipolarplatten 10 alternierend angeordnet, wobei zwischen den Membran-Elektroden-Einheiten 20 und den Bipolarplatten 10 jeweils eine erfindungsgemäße Gasverteilerschicht 30 angeordnet ist. Der gezeigte Brennstoffzellenstapel 1 weist zwei Ausführungen von Bipolarplatten 10, 10' auf, wobei eine erste Ausführung 10 im Innern Kühlmittelkanäle 14 aufweist und eine zweite Ausführung 10' keine Kühlmittelkanäle 14 aufweist.

Den in den Figuren 4 bis 7 gezeigten Ausführungsformen der erfindungsgemäßen Brennstoffzellen beziehungsweise Brennstoffzellenstapel 1 zeichnen sich durch eine reduzierte Bauhöhe und dadurch eine erhöhte Leistungsdichte aus. Die erfindungsgemäßen Ausnehmungen 32 haben die Funktion einen gelichmäßigen Transport der Reaktandengase in Erstreckungsrichtung des aktiven Bereichs sicherzustellen. Dabei ist der Querschnitt der Ausnehmungen 32 derart ausgestaltet, dass er einen möglichst geringen Strömungswiderstand aufweist und somit den Druckverlust der Reaktandengase minimiert. Quer zur Erstreckungsrichtung werden die Reaktandengase über diffuse Kanäle des porösen Füllkörpers 31 verteilt.

### Bezugszeichenliste

- 1: Brennstoffzelle
- 2: Spannelement
- 3: Endplatte

- 10: Bipolarplatte
- 10': Biplarplatte ohne Kühlmittelkanäle
- 11: Plattenhälfte
- 12: Hauptgaskanal
- 13: Kühlmittelhauptkanal
- 13a: aktiver Bereich
- 13b: Verteilerbereich
- 14: Kühlmittelkanal
- 15: Strömungskanal

- 20: Membran-Elektroden-Einheit
- 21: Membran
- 22: Gasdiffusionsschicht
- 23: mikroporöse Schicht

- 30: Gasverteilerschicht
- 31: poröser Flusskörper
- 32: Ausnehmung

## Patentansprüche

1. Brennstoffzellenstapel (1), umfassend:
- Bipolarplatten (10), jeweils aufweisend einen aktiven Bereich (13a), wobei eine Oberfläche der Bipolarplatten (10) zumindest im aktiven Bereich (13a) unprofiliert ausgebildet ist,
- eine zwischen jeweils zwei Bipolarplatten (10) angeordnete Membran-Elektroden-Einheit (20), und
- eine zwischen der Membran-Elektroden-Einheit (20) und zumindest einer der Bipolarplatten (10) angeordnete Gasverteilerschicht (30), wobei die Gasverteilerschicht (30) einen porösen Flusskörper (31) umfasst,
wobei die Gasverteilerschicht (30) im aktiven Bereich (13a) Ausnehmungen (32) aufweist und in zumindest einer der Bipolarplatten (10) Kühlmittelkanäle (14) ausgebildet sind, **dadurch gekennzeichnet, dass** zumindest eine der Bipolarplatten (10) keine Kühlmittelkanäle (14) aufweist.

2. Brennstoffzellenstapel (1) nach Anspruch 1, **dadurch gekennzeichnet, dass** die Ausnehmungen (32) diskrete Kanäle bilden.

3. Brennstoffzellenstapel (1) nach Anspruch 2, **dadurch gekennzeichnet, dass** sich die diskreten Kanäle über den aktiven Bereich (13a) längserstrecken.

4. Brennstoffzellenstapel (1) nach einem der vorhergehenden Ansprüche, **dadurch gekennzeichnet, dass** die Ausnehmungen (32) als Durchgangsöffnungen ausgebildet sind, die sich durch die Dicke der Gasverteilerschicht erstrecken.

5. Brennstoffzellenstapel (1) nach einem der vorhergehenden Ansprüche, **dadurch gekennzeichnet, dass** der poröse Flusskörper (31) eine makroporöse Struktur aufweist.

6. Brennstoffzellenstapel (1) nach einem der vorhergehenden Ansprüche, **dadurch gekennzeichnet, dass** der poröse Flusskörper (31) ein metallisches Material umfasst.

7. Brennstoffzellenstapel (1) nach einem der vorhergehenden Ansprüche, **dadurch gekennzeichnet, dass** der poröse Flusskörper (31) stoffschlüssig mit der Bipolarplatte (10) verbunden ist.

8. Brennstoffzellenstapel (1) nach einem der vorhergehenden Ansprüche, **dadurch gekennzeichnet, dass** die Membran-Elektroden-Einheit (20) eine Gasdiffusionsschicht (22) aufweist die an die Gasverteilerschicht (30) angrenzt und deren Porosität kleiner ist als die Porosität der Gasverteilerschicht (30).

9. Brennstoffzellenstapel (1) nach einem der vorhergehenden Ansprüche, **dadurch gekennzeichnet, dass** Bipolarplatten (10) mit Kühlmittelkanälen (14) und Bipolarplatten (10') ohne Kühlmittelkanäle (14) im Brennstoffzellenstapel (100) alternierend angeordnet sind.

## Claims

1. Fuel cell stack (1), comprising
- bipolar plates (10), having respectively one active portion (13a), wherein a surface of the bipolar plates (10) at least in the active portion (13a) is formed unprofiled,
- a membrane-electrode-unit (20) arranged between in each case two bipolar plates (10), and
- a gas distribution layer (30) arranged between the membrane-electrode-unit (20) and at least one of the bipolar plates (10), wherein the gas distribution layer (30) comprises a porous flux body (31),
wherein the gas distribution layer (30) in the active portion (13a) has recesses (32) and in at least one of the bipolar plates (10) are formed cooling means channels (14), **characterised in that** at least one of the bipolar plates (10) has no cooling means channels (14).

2. Fuel cell stack (1) according to claim 1, **characterised in that** the recesses (32) formed discrete channels.

3. Fuel cell stack (1) according to claim 2, **characterised in that** the discrete channels extend longitudinally across the active portion (13a).

4. Fuel cell stack (1) according to any of the preceding claims, **characterised in that** the recesses (32) are formed as through openings which extend through the thickness of the gas distribution layer.

5. Fuel cell stack (1) according to any of the preceding claims, **characterised in that** the porous flux body (31) has a macro-porous structure.

6. Fuel cell stack (1) according to any of the preceding claims, **characterised in that** the porous flux body (31) comprises a metallic material.

7. Fuel cell stack (1) according to any of the preceding claims, **characterised in that** the porous flux body (31) is connected in a material-fitting manner with the bipolar plate (10).

8. Fuel cell stack (1) according to any of the preceding claims, **characterised in that** the membrane-electrode-unit (20) has a gas diffusion layer (22) which adjoins the gas distribution layer (30) and the porosity of which is smaller than the porosity of the gas distribution layer (30).

9. Fuel cell stack (1) according to any of the preceding claims, **characterised in that** bipolar plates (10) with cooling means channels (14) and bipolar plates (10') without cooling means channels (14) are arranged alternatingly in the fuel cell stack (100).

## Revendications

1. Empilement de piles à combustible (1), comprenant :
- des plaques bipolaires (10), présentant respectivement une zone active (13a), dans lequel une surface des plaques bipolaires (10) est réalisée sans profil au moins dans la zone active (13a),
- une unité membrane-électrodes (20) disposée entre respectivement deux plaques bipolaires (10), et
- une couche de répartition de gaz (30) disposée entre l'unité membrane-électrodes (20) et au moins une des plaques bipolaires (10), dans lequel la couche de répartition de gaz (30) comprend un corps d'écoulement (31) poreux,
dans lequel la couche de répartition de gaz (30) présente, dans la zone active (13a), des évidements (32) et des canaux de liquide de refroidissement (14) sont réalisés dans au moins une des plaques bipolaires (10), **caractérisé en ce qu'**au moins une des plaques bipolaires (10) ne présente aucun canal de liquide de refroidissement (14).

2. Empilement de piles à combustible (1) selon la revendication 1, **caractérisé en ce que** les évidements (32) forment des canaux discrets.

3. Empilement de piles à combustible (1) selon la revendication 2, **caractérisé en ce que** les canaux discrets s'étendent en longueur sur la zone active (13a).

4. Empilement de piles à combustible (1) selon l'une quelconque des revendications précédentes, **caractérisé en ce que** les évidements (32) sont réalisés en tant qu'ouvertures de passage, qui s'étendent à travers l'épaisseur de la couche de répartition de gaz.

5. Empilement de piles à combustible (1) selon l'une quelconque des revendications précédentes, **caractérisé en ce que** le corps d'écoulement (31) poreux présente une structure macroporeuse.

6. Empilement de piles à combustibles (1) selon l'une quelconque des revendications précédentes, **caractérisé en ce que** le corps d'écoulement (31) poreux comprend un matériau métallique.

7. Empilement de piles à combustible (1) selon l'une quelconque des revendications précédentes, **caractérisé en ce que** le corps d'écoulement (31) poreux est relié par liaison de matière à la plaque bipolaire (10).

8. Empilement de piles à combustible (1) selon l'une quelconque des revendications précédentes, **caractérisé en ce que** l'unité membrane-électrodes (20) présente une couche de diffusion de gaz (22), qui jouxte la couche de répartition de gaz (30) et dont la porosité est inférieure à la porosité de la couche de répartition de gaz (30).

9. Empilement de piles à combustible (1) selon l'une quelconque des revendications précédentes, **caractérisé en ce que** des plaques bipolaires (10) avec des canaux de liquide de refroidissement (14) et des plaques bipolaires (10') sans canaux de liquide de refroidissement (14) sont disposées en alternance dans l'empilement de piles à combustible (100).
